# EUROPÄISCHE PATENTSCHRIFT

(11) **EP 3 279 019 B1**
(45) Veröffentlichungstag und Bekanntmachung des Hinweises auf die Patenterteilung: **19.06.2019**
(21) Anmeldenummer: 17179426.6
(22) Anmeldetag: 03.07.2017
(51) Int. Cl.: B60H 1/34, F16H 27/06

(54) **LUFTAUSSTRÖMER-VERSTELLANORDNUNG**
AIR OUTLET ADJUSTMENT ASSEMBLY
SYSTÈME DE RÉGLAGE DE DIFFUSEUR D'AIR

(30) Priorität: 04.08.2016 DE 102016114411
(43) Veröffentlichungstag der Anmeldung: 07.02.2018
(73) Patentinhaber: Dr. Ing. h.c. F. Porsche AG, 70435 Stuttgart (DE); Dr. Schneider Kunststoffwerke GmbH, 96317 Kronach-Neuses (DE)
(72) Erfinder: Mikolajewski, Sergej, 71686 Remseck (DE); Gayer, Bernd, 71287 Weissach (DE); Lange, Norman, 71229 Leonberg (DE); Schneider, Johannes, 96328 Küps (DE)
(74) Vertreter: Patentanwälte ter Smitten Eberlein-Van Hoof Rütten Partnerschaftsgesellschaft mbB

(56) Entgegenhaltungen:
- EP-A1- 1 223 062
- EP-A2- 0 888 916
- DE-A1-102010 008 377
- DE-B3-102015 112 571
- DE-U1- 8 126 754
- JP-A- 2001 138 727

## Beschreibung

Im Bereich der Kraftfahrzeugtechnik werden Luftausströmer für die Klimatisierung des KFZ-Innenraums eingesetzt und sind in unterschiedlichsten Ausführungen bekannt. Die Luftausströmer umfassen üblicherweise ein Luftausströmer-Gehäuse, in dem verstellbare Luftklappen angeordnet sind. Die Luftklappen sind dabei als Ventilklappen oder Leitlamellen ausgeführt, wobei über die Ventilklappen der Volumenstrom und über die Leitlamellen die Richtung des aus dem Luftausströmer austretenden Luftstroms einstellbar sind.

Die Verstellung der Luftklappen erfolgt üblicherweise mit einer Verstellanordnung, die an den Luftklappen angreift und die manuell durch den Fahrzeuginsassen oder elektrisch durch einen elektrischen Antrieb betätigt werden kann. Aus der EP I 520 738 ist beispielsweise eine Verstellanordnung für einen Luftausströmer bekannt, die als Zahnradgetriebe ausgeführt ist. Die Verstellanordnung weist ein durch einen elektrischen Antrieb angetriebenes Antriebszahnrad auf, welches in einem ersten Bewegungsabschnitt mit einem mit Leitlamellen verbundenen Abtriebszahnrad und in einem zweiten Bewegungsabschnitt mit einem mit Ventilklappen verbundenen Abtriebszahnrad wirkverbunden ist. Die Verstellung der Ventilklappen und der Leitlamellen erfolgt über das Verdrehen des Antriebszahnrads. In einer Mittelstellung ist keines der beiden Abtriebszahnräder mit dem Antriebszahnrad wirkverbunden. Von der Mittelstellung ausgehend und abhängig von der Drehrichtung des Antriebszahnrades wird der erste oder der zweite Bewegungsabschnitt durchfahren und werden dabei entweder die Ventilklappen oder die Leitlamellen verstellt. Sind die Zähne der Abtriebszahnräder nicht mit den Zähnen des Antriebszahnrades in Eingriff, wird das betreffende Abtriebszahnrad über ein an der Stirnseite des Antriebszahnrades ausgebildetes Führungselement drehblockierend festgesetzt, wobei die Abtriebszahnräder jeweils ein an ihren Stirnseiten anschließendes Gegenführungselement aufweisen, welches jeweils mit dem Führungselement zusammenwirkt.

Problematisch an einer derartigen Luftausströmer-Verstellanordnung für ein Kraftfahrzeug ist, dass die Verstellanordnung aufgrund der komplexen Ausgestaltung des Antriebszahnrades und der beiden Abtriebszahnräder aufwendig und kostenintensiv herstellbar ist.

Eine weitere gattungsgemäße Luftausströmer-Verstellanordnung ist aus EP 0 888 916 bekannt. Die Aufgabe der Erfindung ist es daher, eine Luftausströmer-Verstellanordnung für ein Kraftfahrzeug bereitzustellen, die einfach und kostengünstig herstellbar ist.

Diese Aufgabe wird durch eine Luftausströmer-Verstefianordnung mit den Merkmalen des Hauptanspruchs gelöst.

Die Luftausströmer-Verstellanordnung weist eine durch einen elektrischen Antrieb angetriebene Antriebseinheit auf, die mit mindestens einer Ventilklappe und mindestens einer Leitlamelle zusammenwirkt.

Erfindungsgemäß setzt sich die Antriebseinheit aus einer Ventilklappen-Kulisse, einer Leitlamellen-Kulisse, einem Kulissenstein und einem Kulissensteinträger zusammen, wobei der Kulissensteinträger mindestens einen ersten Drehbewegungsabschnitt und einen zweiten Drehbewegungsabschnitt aufweist. Die Länge und Lage der Drehbewegungsabschnitte zueinander können dabei je nach Anforderung definiert werden.

Der Kulissensteinträger kann beispielsweise scheibenförmig ausgeführt sein und direkt durch einen elektrischen Antrieb angetrieben werden. Alternativ kann der Kulissensteinträger das Abtriebszahnrad eines Zahnradgetriebes, eines Riemenantriebs oder eines Kettenantriebs bilden.

Auf der Stirnseite des scheibenförmigen Kulissensteinträgers ist der Kulissenstein exzentrisch angeordnet, wobei der Kulissenstein ein Bolzen sein kann, der über eine Schraub-, Klebe- oder Schweißverbindung an dem Kulissensteinträger befestigt ist. Durch die exzentrische Anordnung des Kulissensteins auf dem Kulissensteinträger sowie die Verdrehung des Kulissensteinträgers bewegt sich der Kulissenstein auf einer Kreisbahn und greift, abhängig davon, welcher Drehbewegungsabschnitt des Kulissensteinträgers durchfahren wird, in die Ventilklappen-Kulisse oder die Leitlamellen-Kulisse ein.

Die Ventilklappen-Kulisse und die Leitlamellen-Kulisse sind mittelbar oder unmittelbar mit der Ventilklappe bzw. der Leitlamelle verbunden. Die Ventilklappen-Kulisse und die Leitlamellen-Kulisse weisen jeweils einen Schlitz oder eine Nut auf, die mit ihrem offenen Enden derart zur Kreisbahn des Kulissensteins ausgerichtet sind, dass der auf seiner Kreisbahn bewegte Kulissenstein in den Schlitz bzw. in die Nut der Ventilklappen-Kulisse oder der Leitlamellen-Kulisse eingreifen kann.

Im Betrieb ist der Eingriff des Kulissensteins in die Ventilklappen-Kulisse oder in die Leitlamellen-Kulisse davon abhängig, welcher Drehbewegungsabschnitt des Kulissensteinträgers durchfahren wird. Im ersten Drehbewegungsabschnitt greift der Kulissenstein in die Ventilklappen-Kulisse ein und verdreht die Ventilklappen-Kulisse sowie die damit verbundene Ventilklappe stufenlos zwischen einer Öffnungs- und Schließposition. In gleicher Weise erfolgt die Verdrehung der Leitlamelle, während der zweite Drehbewegungsabschnitt des Kulissensteinträgers durchfahren wird und der Kulissenstein in die Leitlamellen-Kulisse eingreift.

Durch eine derartige Ausgestaltung der Verstellanordnung kann diese einfach und kostengünstig ausgeführt werden, da die einzelnen Komponenten der Verstellanordnung einfach herstellbar sind. Dabei weist die Verstellanordnung keine Zahnräder auf, die aufwendig und kostenintensiv hergestellt werden müssten.

In einer bevorzugten Ausgestaltung überlagern sich der erste und der zweite Drehbewegungsabschnitt nicht, so dass beim Durchfahren derjeweiligen Drehbewegungsabschnitte entweder die Ventilklappen oder die Leitlamellen verstellt werden Auf diese Weise kann die Luftklappen-Kulisse unabhängig von der Leitlamellen-Kulisse gestaltet werden, wodurch die Herstellung und Ausgestaltung der Kulissen erleichtert wird

Vorzugsweise ist die Antriebseinheit als ein Getriebe ausgeführt. Die Antriebseinheit ist beispielsweise ein einstufiges Stirnradgetriebe und weist ein Antriebszahnrad und ein Abtriebszahnrad auf, wobei das Antriebszahnrad über eine Antriebswelle durch den elektrischen Antrieb angetrieben wird und das Abtriebszahnrad als Kulissensteinträger dient. Durch das Getriebe kann ein handelsüblicher Elektromotor als elektrischer Antrieb eingesetzt werden, wobei die relativ langsame Verdrehgeschwindigkeit der Ventilklappen bzw. der Leitlamellen über das gewählte Übersetzungsverhältnis eingestellt werden kann.

Vorzugsweise weisen die Ventilklappen-Kulisse und die Leitlamellen-Kulisse jeweils einen Schlitz auf, in den der Kulissenstein jeweils eingreifen kann. Alternativ könnte die Ventilklappen-Kulisse und die Leitlamellen-Kulisse jeweils eine Nut aufweisen, in die der Kulissenstein eingreifen kann. Auf diese Weise kann die Kulisse einfach und kostengünstig hergestellt werden. Der Schlitz bzw. die Nut können dabei eine beliebige Verlaufsform aufweisen, wodurch die Verdrehung der Ventilklappen bzw. der Leitlamellen dynamisch beeinflusst werden kann.

In einer bevorzugten Ausgestaltung weist der Kulissensteinträger ein Führungselement auf, welches sich axial von einer Stirnfläche des Kulissensteinträgers erstreckt und mit der Umfangsfläche als Führung für die Ventilklappen-Kulisse und die Leitlamellen-Kulisse bei nicht eingreifendem Kulissenstein dient. Die Ventilklappen-Kulisse und die Leitlamellen-Kulisse weisen jeweils ein Gegenführungselement auf, welches mit dem Führungselement zusammenwirkt. Auf diese Weise können die Ventilklappe bzw. die Leitlamelle auch bei nicht in die Ventilklappen-Kulisse oder Leitlamellen-Kulisse eingreifendem Kulissenstein drehblockiert werden.

Vorzugsweise ist die Drehachse der Ventilklappe parallel zu der Drehachse der Leitlamelle ausgerichtet. Dadurch kann die Antriebseinheit einfach und mit wenigen Bauteilen ausgeführt werden kann, da die Antriebseinheit in einer gemeinsamen Ebene auf die Ventilklappen-Kulisse und die Leitlamellen-Kulisse angreift und keine Umlenkung der Kraft in eine andere Ebene benötigt wird. Alternativ ist die Drehachse der Ventilklappe senkrecht zur Drehachse der Leitlamelle ausgerichtet.

Vorzugsweise ist die Ventilklappe stromaufwärts der Leitlamelle angeordnet, wodurch das für den Fahrzeuginsassen sichtbare Design des Luftausströmers, während den unterschiedlichen Stellungen der Ventilklappe und der Leitlamelle, nahezu unverändert bleibt.

In einer bevorzugten Ausgestaltung sind mehrere Ventilklappen über ein Ventilklappen-Verbindungselement und/oder mehrere Leitlamellen über ein Leitlamellen-Verbindungselement miteinander verbunden. Dabei sind insbesondere mehrere Leitlamellen vorteilhaft, wodurch der aus dem Luftausströmer austretende Luftstrom besser geführt werden kann. Die Ventilklappen-Kulisse ist mit einer Ventilklappe drehfest und mit weiteren Ventilklappen über das Ventilklappen-Verbindungselemente verbunden, so dass durch die Verdrehung der Ventilklappen-Kulisse alle Ventilklappen gemeinsam und synchron verdreht werden. In gleicher Weise ist eine Leitlamelle drehfest mit der Leitlamellen-Kulisse und über das Leitlamellen-Verbindungselement mit weiteren Leitlamellen verbunden, wobei durch die Verdrehung der Leitlamellen-Kulisse alle Leitlamellen gemeinsam verdreht werden.

Die Erfindung wird anhand Zeichnungen näher erläutert. Hierbei zeigt:
Figur 1 eine schematische Draufsicht einer Luftausströmer-Verstellvorrichtung,
Figur 2 eine Darstellung der in Figur 1 dargestellten Luftausströmer-Verstellvorrichtung in einer ersten Stellung, und
Figur 3 eine Darstellung der in Figur 1 dargestellten Luftausströmer-Verstellvorrichtung in einer zweiten Stellung.

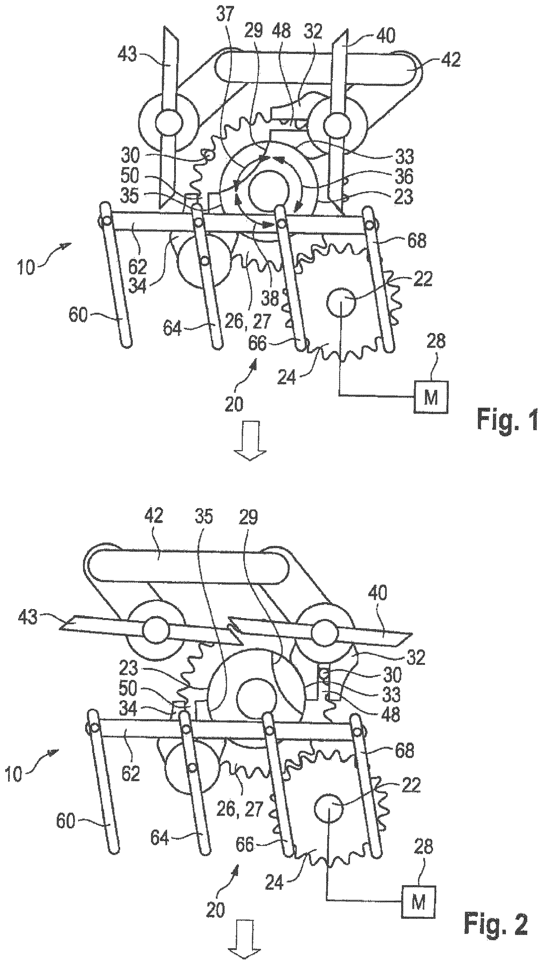

Figur 1 zeigt eine schematische Ansicht einer Luftausströmer-Verstellanordnung 10 mit einer Antriebseinheit 20, die als ein Getriebe ausgeführt ist. Die Antriebseinheit 20 weist eine Antriebszahnrad 24 auf, welches mit einer durch einen elektrischen Antrieb angetriebenen Antriebswelle 22 drehfest verbunden ist. Das Antriebszahnrad 24 greift in ein Abtriebszahnrad 27 ein und treibt das Abtriebszahnrad 27 an.

Auf einer Stirnseite des Abtriebszahnrades 27 ist ein Kulissenstein 30 exzentrisch angeordnet, so dass das Abtriebszahnrad 27 als Kulissensteinträger 26 dient. Bezogen auf den Kulissenstein 30 weist das Abtriebszahnrad 27 einen ersten Drehbewegungsabschnitt 36, einen zweiten Drehbewegungsabschnitt 38 und einen Mittel-Drehbewegungsabschnitt 37 auf, wobei im ersten Drehbewegungsabschnitt 36 der Kulissenstein 30 in eine Ventilklappen-Kulisse 32, im zweiten Drehbewegungsabschnitt 38 in eine Leitlamellen-Kulisse 34 und im Mittel-Drehbewegungsabschnitt 37 weder in die Ventilklappen-Kulisse 32 noch in die Leitlamellen-Kulisse 34 eingreift.

Die Ventilklappen-Kulisse 32 ist mit einer Ventilklappe 40 und über ein Ventilklappen-Verbindungselement 42 mit einer zweiten Ventilklappe 43 verbunden, so dass durch die Verdrehung der Ventilklappen-Kulissen 32 beide Ventilklappen 40, 43 verdreht werden.

Die Leitlamellen-Kulisse 34 ist mit einer Leitlamelle 64 und über ein Leitlamellen-Verbindungselement 62 mit drei weiteren Leitlamellen 60, 66, 68 verbunden, wodurch die Leitlamellen 60, 62, 66, 68 gemeinsam und synchron durch die Verdrehung der Leitlamellen-Kulisse 34 verdreht werden.

Die Ventilklappen-Kulisse 32 und die Leitlamellen-Kulisse 34 weisen jeweils ein Gegenführungselement 33, 35 auf, das auf einem am Abtriebszahnrad 27 ausgebildeten Führungselement 23 gleitet, wenn der Kulissenstein 30 nicht in die Ventilklappen-Kulisse 32 bzw. nicht in die Leitlamellen-Kulisse 34 eingreift. Auf diese Weise wird beispielsweise die Ventilklappen-Kulisse 32 drehblockiert, wenn der Kulissenstein 30 mit der Leitlamellen-Kulisse 34 in Eingriff ist. Greift der Kulissenstein 30 in die Ventilklappen-Kulisse 32 ein, liegt das Gegenführungselement 33 nicht am Führungselement 23 an, wobei das Führungselement 23 eine Aussparrung 29 aufweist, damit die Verdrehung der Ventilklappen-Kulisse 32 nicht durch das Führungselement 23 gesperrt wird.

Figur 1 zeigt eine Stellung des Kulissensteinsträgers 26 im Mittel-Drehbewegungsabschnitt 37, wobei der Kulissenstein 30 weder in die Ventilklappen-Kulisse 32 noch in die Leitlamellen-Kulisse 34 eingreift. Während des Mittel-Drehbewegungsabschnitts 37 liegen die Gegenführungselemente 33, 35 an dem Führungselement 23 an, wodurch die Ventilklappen-Kulisse 32 und die Leitlamellen-Kulisse 34 durch das Führungselement 23 drehblockierend festgesetzt sind und die Ventilklappen 40, 43 und die Leitlamellen 60, 64, 66, 68 in Richtung des Luftstroms ausgerichtet sind. Die Richtung des Luftstroms ist in den Figuren als konturierter Pfeil dargestellt.

In Figur 2 greift der Kulissenstein 30 in einen an der Ventilklappen-Kulisse 32 ausgebildeten Schlitz 48 ein, wobei die Ventilklappen 40, 43 in Quer- bzw. Schließstellung dargestellt sind, die sich einstellt, nachdem der erste Drehbewegungsabschnitt 36 des Kulissensteinträgers durchfahren wurde. Dabei verkleinert sich mit fortschreitender Bewegung des Kulissensteins 30 in dem Schlitz 48 der freie Durchströmungsquerschnitt des Luftausströmers, bis am Drehbewegungsabschnitts-Ende der Luftausströmer vollständig verschlossen ist.

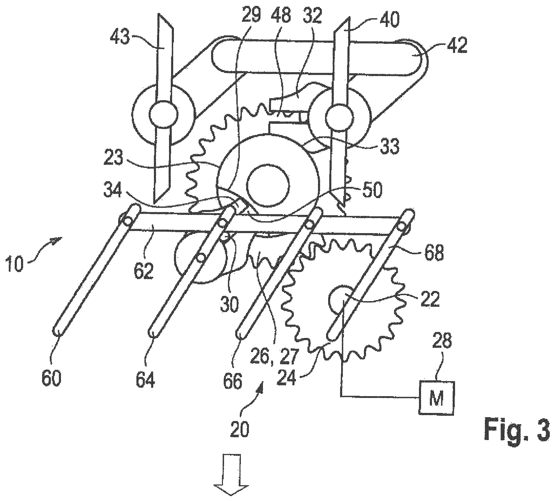

Figur 3 zeigt das Durchfahren des zweiten Drehbewegungsabschnittes 38 und den Eingriff des Kulissensteins 30 in die Leitlamellen-Kulisse 34. Die Leitlamellen-Kulisse 34 weist hierfür einen Schlitz 50 auf, in dem der Kulissenstein 30 gleitet und die Leitlamellen-Kulisse 34 verdreht. Durch die Verdrehung der Leitlamellen-Kulissen werden die Leitlamellen 60, 64, 66, 68 synchron verdreht. Auf diese Weise kann die Richtung des Luftstroms eingestellt werden, wobei über den elektrischen Antrieb auch Zwischenstellungen im zweiten Drehbewegungsabschnitt 38 eingestellt werden können.

Es sind auch andere konstruktive Ausführungsformen als die beschriebenen Ausführungsformen möglich, die in den Schutzbereich des Hauptanspruchs fallen. Es kann beispielsweise die Antriebseinheit 20 oder die Ventilklappen-Kulisse 32 bzw. die Leitlamellen-Kulisse 34 anders ausgeführt sein.

## Patentansprüche

1. Luftausströmer-Verstellanordnung (10) für ein Kraftfahrzeug, mit einer durch einen elektrischen Antrieb (28) angetriebenen Antriebseinheit (20), die auf mindestens eine schwenkbare Ventilklappe (40) und mindestens eine schwenkbare Leitlamelle (64) wirkt,
**dadurch gekennzeichnet, dass**
die Antriebseinheit (20) einen drehbar angeordneten Kulissensteinträger (26) mit einem daran exzentrisch angeordneten Kulissenstein (30) aufweist, wobei der Kulissenstein (30) in einem ersten Drehbewegungsabschnitt (36) des Kulissensteinträgers (26) in eine mit der mindestens einen Ventilklappe (40) drehfest verbundene Ventilklappen-Kulisse (32) und in einem zweiten Drehbewegungsabschnitt (38) des Kulissensteinträgers (26)in eine mit der mindestens einen Leitlamelle (64) drehfest verbundene Leitlamellen-Kulisse (34) eingreift.

2. Luftausströmer-Verstellanordnung (10) nach Anspruch 1, **dadurch gekennzeichnet, dass** der erste Drehbewegungsabschnitt (36) des Kulissensteinträgers (26) und der der zweite Drehbewegungsabschnitt (38) des Kulissensteinträgers (26) sich nicht überlagern.

3. Luftausströmer-Verstellanordnung (10) nach Anspruch 1 oder 2, **dadurch gekennzeichnet, dass** die Antriebseinheit (20) als ein Getriebe mit einem Antriebszahnrad (24) und einem Abtriebszahnrad (27) ausgeführt ist, wobei das Abtriebszahnrad (27) den Kulissensteinträger (26) bildet und das Antriebszahnrad (24) über eine Antriebswelle (22) mit dem elektrischen Antrieb (28) drehfest verbunden ist.

4. Luftausströmer-Verstefianordnung (10) nach einem der vorhergehenden Ansprüche, **dadurch gekennzeichnet, dass** die Ventilklappen-Kulisse (32) und die Leitlamellen-Kulisse (34) jeweils einen Schlitz(48, 50) aufweisen, in die der Kulissenstein (30) eingreift.

5. Luftausströmer-Verstellanordnung (10) nach einem der vorhergehenden Ansprüche, **dadurch gekennzeichnet, dass** der Kulissensteinträger (26) ein Kulissenführungselement (23) aufweist, die mit einem Gegenführungselement (33) der Ventilklappen-Kulisse (32) und mit einem Gegenführungselement (35) der Leitlamellen-Kulisse (34) drehblockierend zusammenwirkt.

6. Luftausströmer-Verstellanordnung (10) nach einem der vorhergehenden Ansprüche, **dadurch gekennzeichnet, dass** die Drehachse der mindestens einen Ventilklappe (40) und die Drehachse der mindestens einen Leitlamelle (64) parallel zueinander ausgerichtet sind.

7. Luftausströmer-Verstellanordnung (10) nach einem der vorhergehenden Ansprüche, **dadurch gekennzeichnet, dass** die mindestens eine Ventilklappe (40) stromaufwärts der mindestens einen Leitlamelle (64) angeordnet ist.

8. Luftausströmer-Verstellanordnung (10) nach einem der vorhergehenden Ansprüche, **dadurch gekennzeichnet, dass** mehrere Ventilklappen (40, 43) über eine Ventilklappen-Verbindungselement (42) und/oder mehrere Leitlamellen (60, 64, 66, 68) über ein Leitlamellen-Verbindungselement (52) jeweils miteinander verbunden sind, wobei die Ventilklappen-Kulisse (32) mit einer Ventilklappe (40) und die Leitlamellen-Kulisse (34) mit einer Leitlamelle (64) drehfest verbunden sind.

## Claims

1. Air-outlet adjusting assembly (10) for a motor vehicle, having a drive unit (20), which is driven by an electric drive (28) and which acts on at least one pivotable valve flap (40) and at least one pivotable guide slat (64),
**characterized in that**
the drive unit (20) has a rotatably arranged sliding-block carrier (26) having a sliding block (30) arranged eccentrically thereon, wherein, in a first rotary motion segment (36) of the sliding-block carrier (26), the sliding block (30) engages in a valve-flap slotted link (32) connected for conjoint rotation to the at least one valve flap (40) and, in a second rotary motion segment (38) of the sliding-block carrier (26), said sliding block engages in a guide-slat slotted link (34) connected for conjoint rotation to the at least one guide slat (64) .

2. Air-outlet adjusting assembly (10) according to Claim 1, **characterized in that** the first rotary motion segment (36) of the sliding-block carrier (26) and the second rotary motion segment (38) of the sliding-block carrier (26) do not overlap.

3. Air-outlet adjusting assembly (10) according to Claim 1 or 2, **characterized in that** the drive unit (20) is embodied as a mechanism having an input gearwheel (24) and an output gearwheel (27), wherein the output gearwheel (27) forms the sliding-block carrier (26) and the input gearwheel (24) is connected for conjoint rotation to the electric drive (28) by an input shaft (22) .

4. Air-outlet adjusting assembly (10) according to one of the preceding claims, **characterized in that** the valve-flap slotted link (32) and the guide-slat slotted link (34) each have a slot (48, 50), in which the sliding block (30) engages.

5. Air-outlet adjusting assembly (10) according to one of the preceding claims, **characterized in that** the sliding-block carrier (26) has a slotted guide element (23), which interacts with a counter guide element (33) of the valve-flap slotted link (32) and with a counter guide element (35) of the guide-slat slotted link (34) to block rotation.

6. Air-outlet adjusting assembly (10) according to one of the preceding claims, **characterized in that** the axis of rotation of the at least one valve flap (40) and the axis of rotation of the at least one guide slat (64) are aligned parallel to one another.

7. Air-outlet adjusting assembly (10) according to one of the preceding claims, **characterized in that** the at least one valve flap (40) is arranged upstream of the at least one guide slat (64).

8. Air-outlet adjusting assembly (10) according to one of the preceding claims, **characterized in that** in each case a plurality of valve flaps (40, 43) are connected to one another by a valve-flap connecting element (42), and/or a plurality of guide slats (60, 64, 66, 68) are connected to one another by a guide-slat connecting element (52), wherein the valve-flap slotted link (32) is connected for conjoint rotation to a valve flap (40), and the guide-slat slotted link (34) is connected for conjoint rotation to a guide slat (64).

## Revendications

1. Système de réglage de diffuseur d'air (10) pour un véhicule automobile, avec une unité d'entraînement (20) entraînée par un entraînement électrique (28), qui agit sur au moins un clapet de soupape pivotant (40) et sur au moins une lamelle directrice pivotante (64), **caractérisé en ce que** l'unité d'entraînement (20) présente un support de coulisseau (26) monté de façon rotative avec un coulisseau (30) disposé de façon excentrique sur celui-ci, dans lequel le coulisseau (30) s'engage dans une première partie du mouvement de rotation (36) du support de coulisseau (26) dans une coulisse de clapet de soupape (32) reliée de façon calée en rotation audit au moins un clapet de soupape (40) et dans une deuxième partie du mouvement de rotation (38) du support de coulisseau (26) dans une coulisse de lamelle directrice (34) reliée de façon calée en rotation à ladite au moins une lamelle directrice (64).

2. Système de réglage de diffuseur d'air (10) selon la revendication 1, **caractérisé en ce que** la première partie du mouvement de rotation (36) du support de coulisseau (26) et la deuxième partie du mouvement de rotation (38) du support de coulisseau (26) ne se superposent pas.

3. Système de réglage de diffuseur d'air (10) selon une revendication 1 ou 2, **caractérisé en ce que** l'unité d'entraînement (20) est formée par un engrenage avec une roue dentée menante (24) et une roue dentée menée (27), dans lequel la roue dentée menée (27) forme le support de coulisseau (26) et la roue dentée menante (24) est reliée de façon calée en rotation par un arbre d'entraînement (22) à l'entraînement électrique (28).

4. Système de réglage de diffuseur d'air (10) selon l'une quelconque des revendications précédentes, **caractérisé en ce que** la coulisse de clapet de soupape (32) et la coulisse de lamelle directrice (34) présentent respectivement une fente (48, 50), dans laquelle le coulisseau (30) s'engage.

5. Système de réglage de diffuseur d'air (10) selon l'une quelconque des revendications précédentes, **caractérisé en ce que** le support de coulisseau (26) présente un élément de guidage de coulisse (23), qui coopère d'une façon bloquant la rotation avec un élément de guidage opposé (33) de la coulisse de clapet de soupape (32) et avec un élément de guidage opposé (35) de la coulisse de lamelle directrice (34).

6. Système de réglage de diffuseur d'air (10) selon l'une quelconque des revendications précédentes, **caractérisé en ce que** l'axe de rotation dudit au moins un clapet de soupape (40) et l'axe de rotation de ladite au moins une lamelle directrice (64) sont orientés parallèlement l'un à l'autre.

7. Système de réglage de diffuseur d'air (10) selon l'une quelconque des revendications précédentes, **caractérisé en ce que** ledit au moins un clapet de soupape (40) est disposé en amont de ladite au moins une lamelle directrice (64).

8. Système de réglage de diffuseur d'air (10) selon l'une quelconque des revendications précédentes, **caractérisé en ce que** plusieurs clapets de soupape (40, 43) sont respectivement reliés l'un à l'autre par un élément de liaison de clapets de soupape (42) et/ou plusieurs lamelles directrices (60, 64, 66, 68) sont respectivement reliées l'une à l'autre par un élément de liaison de lamelles directrices (52), dans lequel la coulisse de clapet de soupape (32) est reliée de façon calée en rotation à un clapet de soupape (40) et la coulisse de lamelle directrice (34) est reliée de façon calée en rotation à une lamelle directrice (64).
